(19) Europäisches Patentamt / European Patent Office / Office européen des brevets

(11) **EP 3 489 485 B2**

(12) **NEW EUROPEAN PATENT SPECIFICATION**

After opposition procedure

(45) Date of publication and mention
of the opposition decision:
**18.06.2025 Bulletin 2025/25**

(45) Mention of the grant of the patent:
**06.04.2022 Bulletin 2022/14**

(21) Application number: **18207838.6**

(22) Date of filing: **22.11.2018**

(51) International Patent Classification (IPC):
**F02C 3/10** (2006.01)    **F02C 7/36** (2006.01)
**F02C 9/28** (2006.01)

(52) Cooperative Patent Classification (CPC):
**F02C 7/36; F02C 3/10; F02C 9/28;**
F05D 2260/40311; F05D 2260/821; F05D 2270/052;
F05D 2270/06; F05D 2270/335

(54) **TORQUE SIGNAL DYNAMIC COMPENSATION BASED ON SENSOR LOCATION**

DYNAMISCHE KOMPENSATION EINES DREHMOMENTSIGNALS BASIEREND AUF DER SENSORPOSITION

COMPENSATION DYNAMIQUE DE SIGNAL DE COUPLE BASÉ SUR UN EMPLACEMENT DE DÉTECTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.11.2017 US 201715821807**

(43) Date of publication of application:
**29.05.2019 Bulletin 2019/22**

(73) Proprietor: **Pratt & Whitney Canada Corp.**
**Longueuil, Québec J4G 1A1 (CA)**

(72) Inventor: **MEUNIER, Gabriel**
**(01BE5) Longueuil, Québec J4G 1A1 (CA)**

(74) Representative: **Dehns**
**10 Old Bailey**
**London EC4M 7NG (GB)**

(56) References cited:
**EP-A1- 3 258 070     US-A- 3 709 069**
**US-A- 4 522 026**

EP 3 489 485 B2

## Description

TECHNICAL FIELD

The present disclosure relates to control systems for gas turbine engines.

BACKGROUND OF THE ART

Control systems for a gas turbine engine consider a variety of parameters when regulating the operation of the engine. These parameters are collected via sensors, which may be actual physical sensors or virtual sensors, which use other measurements to derive the desired parameter. One such parameter is a value of torque output by the engine. Since output torque is representative of a value of output power, measuring output torque is useful for regulating fuel flow to the engine. In addition, if the torque exceeds a particular limit, one or more components of the engine may be damaged, requiring maintenance and/or repairs.

Traditional approaches rely on measuring torque at an output shaft of the engine, whether directly or via a virtual sensor. However, depending on the nature of the load connected to the output shaft, changes in behaviour of the load may interact with measurements of output torque, thereby failing to provide an accurate measurement.

Thus, improvements may be needed.

A prior art method for controlling a gas turbine engine is disclosed in US 3 709 069 A. Further prior art methods are disclosed in US 4 522 026 A and EP 3 258 070 A1.

SUMMARY

In accordance with an aspect of the present invention, there is provided a method for operating a gas turbine engine as claimed in claim 1.

In some embodiments, determining the second torque is based on the equation $Q_{pt} = Q_s + \dot{N}_{pt} \cdot I_{pt}$, where $Q_{pt}$ is the second torque, $Q_s$ is the first torque, $\dot{N}_{pt}$ is the acceleration of the shaft, and $I_{pt}$ is the rotational inertia of the shaft.

In some embodiments, determining the power is based on the equation $SHP_{pt} = Q_{pt} \cdot N_{pt} \cdot k$, where $SHP_{pt}$ is the power, $Q_{pt}$ is the second torque, $N_{pt}$ is the speed of the shaft, and k is a predetermined constant.

In some embodiments, controlling operation of the engine comprises adjusting a fuel flow to the engine.

In some embodiments, controlling operation of the engine comprises adjusting a blade angle of a propeller coupled to the engine.

In some embodiments, the method further comprises comparing the first torque to associated torque limits, wherein controlling operation of the engine comprises preventing the first torque from surpassing the associated torque limits.

In some embodiments, the engine is for an aircraft, further comprising displaying, to an operator of the aircraft, at least one of the second torque and the power.

In accordance with another aspect of the present invention, there is provided an engine control system for a gas turbine engine as claimed in claim 8.

In some embodiments, determining the second torque is based on the equation $Q_{pt} = Q_s + \dot{N}_{pt} \cdot I_{pt}$, where $Q_{pt}$ is the second torque, $Q_s$ is the first torque, $\dot{N}_{pt}$ is the acceleration of the shaft, and $I_{pt}$ is the rotational inertia of the shaft.

In some embodiments, determining the power is based on the equation $SHP_{pt} = Q_{pt} \cdot N_{pt} \cdot k$, where $SHP_{pt}$ is the power, $Q_{pt}$ is the second torque, $N_{pt}$ is the speed of the shaft, and k is a predetermined constant.

In some embodiments, controlling operation of the engine comprises adjusting a fuel flow to the engine.

In some embodiments, controlling operation of the engine comprises adjusting a blade angle of a propeller coupled to the engine.

In some embodiments, the program instructions are further executable by the processing unit for comparing the first torque to associated torque limits, wherein controlling operation of the engine comprises preventing the first torque from surpassing the associated torque limits.

In some embodiments, the engine is for an aircraft, wherein the program instructions are further executable by the processing unit for displaying, to an operator of the aircraft, at least one of the second torque and the power.

BRIEF DESCRIPTION OF THE DRAWINGS

Reference is now made to the accompanying figures in which:

Figure 1 is a schematic cross-sectional view of an example gas turbine engine;

Figure 2 is a block diagram of the gas turbine engine of Figure 1;

Figure 3 is a flowchart illustrating an example method for controlling the engine of Figure 1, in accordance with an embodiment; and

Figure 4 is a block diagram of an example computer system for implementing the method of Figure 3.

It will be noted that throughout the appended drawings, like features are identified by like reference numerals.

DETAILED DESCRIPTION

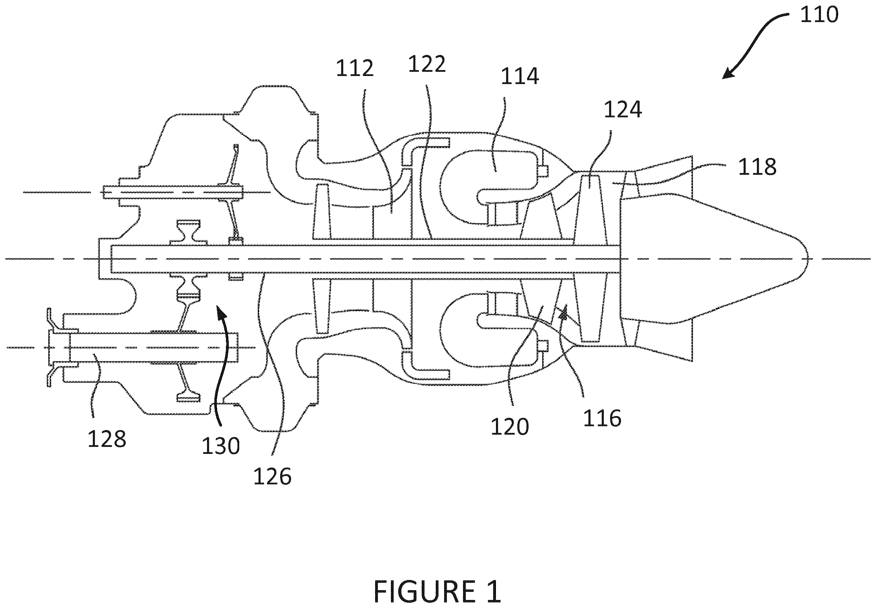

FIG. 1 illustrates a gas turbine engine 110 of a type preferably provided for use in subsonic flight, generally comprising in serial flow communication, a compressor section 112 for pressurizing the air, a combustor 114 in which the compressed air is mixed with fuel and ignited for generating an annular stream of hot combustion gases, and a turbine section 116 for extracting energy from the combustion gases. The combustion gases flowing out of the combustor 114 circulate through the turbine section 116 and are expelled through an exhaust duct 118. The turbine section 116 includes a compressor turbine 120 in driving engagement with the compressor section 112 through a high pressure shaft 122, and a power turbine 124 in driving engagement with a power shaft 126. The power shaft 126 is in driving engagement with an output shaft 128 through a gearbox 130, which may be a reduction gearbox.

Although illustrated as a turboshaft engine, the gas turbine engine 110 may alternatively be another type of engine, for example a turbofan engine, also generally comprising in serial flow communication a compressor section, a combustor, and a turbine section, and a fan through which ambient air is propelled. A turboprop engine may also apply. In addition, although the engine 110 is described herein for flight applications, it should be understood that other uses, such as industrial or the like, may apply.

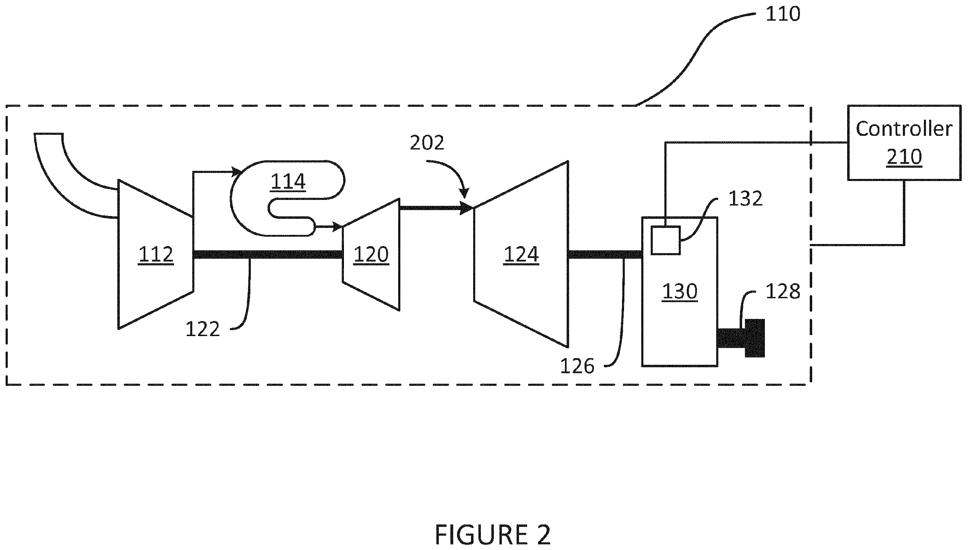

With reference to Figure 2, the gas turbine engine 110 of Figure 1 is reproduced in block diagram form. The engine 110 is configured for being controlled by a controller 210, which may be a full-authority digital engine controls (FADEC) or other similar device, including an electronic engine control (EEC), an engine control unit (EUC), a combination of various actuators, and the like. In some embodiments, the controller 210 is configured for regulating a fuel flow to the engine 110 based on one or more parameters measured from the engine 110. In other embodiments, the controller 210 is configured for adjusting one or more parameters associated with a load of the engine 110. For example, the controller 210 adjusts a feathering level of a propeller coupled to the engine (e.g. via the output shaft 128), for instance by communicating one or more instructions to a propeller controller. In another example, the controller 210 adjusts a blade angle of the propeller. In addition, located at the gearbox 130 is a torque sensor 132 for measuring a first torque produced by the engine 110 at the gearbox 130. The sensor 132 is configured for providing the controller 210 with the first torque produced by the engine 110. The sensor 132 provides the controller 210 with the first torque via one or more wired connections, via one or more wireless connections, or any suitable combination thereof.

In some embodiments, the sensor 132 is a physical sensor located at a position proximate to or within the gearbox 130. Thus, the expression "at the gearbox" refers to any suitable location proximate to or within the gearbox 130. For example, the sensor 132 is located at a coupling point between the power shaft 126 and the gearbox 130. In another example, the sensor 132 is located near one or more gears within the gearbox 130.

In a further example, the sensor 132 is located proximate to a coupling point between the gearbox 130 and the output shaft 128. The sensor 132 may be any suitable torque sensor.

In some other embodiments, the sensor 132 is a virtual sensor which is considered to be "located at" the gearbox 130 insofar as the virtual sensor 132 is configured for determining a value of the first torque at the gearbox 130, even though the sensor value is derived in a computing system which, in some embodiments, is located remotely from the gearbox 130. The sensor 132 may use any suitable values which may be collected from one or more physical sensors and/or one or more further virtual sensors at different locations throughout the engine 110.

The controller 210 is configured for using the first torque to determine a second torque. The second torque value is a value representative of the torque produced by the engine at point 202, namely at the power turbine 124. The point 202 can be located within the power turbine 124, at a coupling point between the power turbine and a shaft or other mechanical implement linking the power turbine 124 to the compressor turbine 120, or any other suitable location proximate the power turbine 124. The second torque can be determined by treating the power turbine and power shaft 126 as a rigid body. In some embodiments, the second torque is also based on an acceleration of the power shaft 126 and a rotational inertia of the power shaft 126. For example, the second torque can be determined using the equation:

$$Q_{pt} = Q_s + \dot{N}_{pt} \cdot I_{pt} \ ,$$

where $Q_{pt}$ is the second torque, $Q_s$ is the first torque, $\dot{N}_{pt}$ is the acceleration of the power shaft 126, and $I_{pt}$ is the rotational inertia of the power shaft 126. Thus, by using the relevant kinematics equation, the second torque, at point 202 near the power turbine 124, can be determined.

The controller 210 is also configured for using the second torque to determine a power produced by the engine at the power turbine 124, which can be used as a measure of the output power of the engine 110. In some embodiments, the power is also based on a speed of the power shaft 126. For example, the power can be determined using the equation:

$$SHP_{pt} = Q_{pt} \cdot N_{pt} \cdot k \ ,$$

where $SHP_{pt}$ is the power at the power turbine, $Q_{pt}$ is the second torque, $N_{pt}$ is the speed of the power shaft 126, and k is a predetermined constant. Thus, by using the relevant kinematics equation, the power, at point 202 near the power turbine 124, can be determined.

Because the second torque is mathematically translated from the gearbox to the power turbine, it is decoupled from the load attached to the engine and changes in the operation of the load do not affect the value of the second torque, or the value of the power. Thus, the second torque can be used to determine the amount of power output by the engine 110 without being influenced by the load attached to the engine.

The controller 210 is further configured for controlling operation of the engine 110 based on the power. In some embodiments, the controller 210 controls a fuel flow to the engine and/or a feathering level of a propeller coupled to the engine as part of power governing for the engine 110 and/or propeller governing for the propeller. Still other control schemes are considered. In some other embodiments, the controller 210 is configured to control operation of the engine 110 to ensure that predetermined limits of power, torque, speed, acceleration, and the like are not exceeded, for example as part of torque governing for the engine 110 to reduce the risk of damage to the gearbox 130. For example, the controller 210 is further configured for receiving input from an operator of the engine 110 and for adjusting the operation of the engine 110 in consequence. In some embodiments, the controller 210 is configured for displaying one or more of the first torque, the second torque, and the power to the operator of the engine 110, for example an operator of an aircraft to which the engine 110 belongs.

In another example, a predetermined limit for the first torque, at the gearbox 130, and a predetermined limit for the second torque, at the power turbine 124, are set by a manufacturer or operator of the engine 110. The controller 210 is configured for comparing the first torque and the second torque to the respective limits and to control operation of the engine 110 to ensure that the limits are not exceeded. Similarly, the controller 210 may be provided with other limits and ensure that the engine 110 operates within those limits.

In some embodiments, the power at the power turbine can be used as part of a power control feedback loop. The two equations described hereinabove can be implemented via an engine controller, for example the controller 210, which measures or otherwise obtains the first torque $Q_s$, via a sensor, for example the sensor 132. The controller 210 can obtain the power shaft acceleration $\dot{N}_{pt}$ by performing a finite time differentiation of the power shaft speed $N_{pt}$, and the rotational inertia $I_{pt}$ of the shaft portion from power turbine to the sensor location can be a constant stored in the engine controller or a memory thereof. The power control feedback loop implemented by the controller 210 and using the power $SHP_{pt}$ calculated at the power turbine can thus be used to control operation of the engine 110.

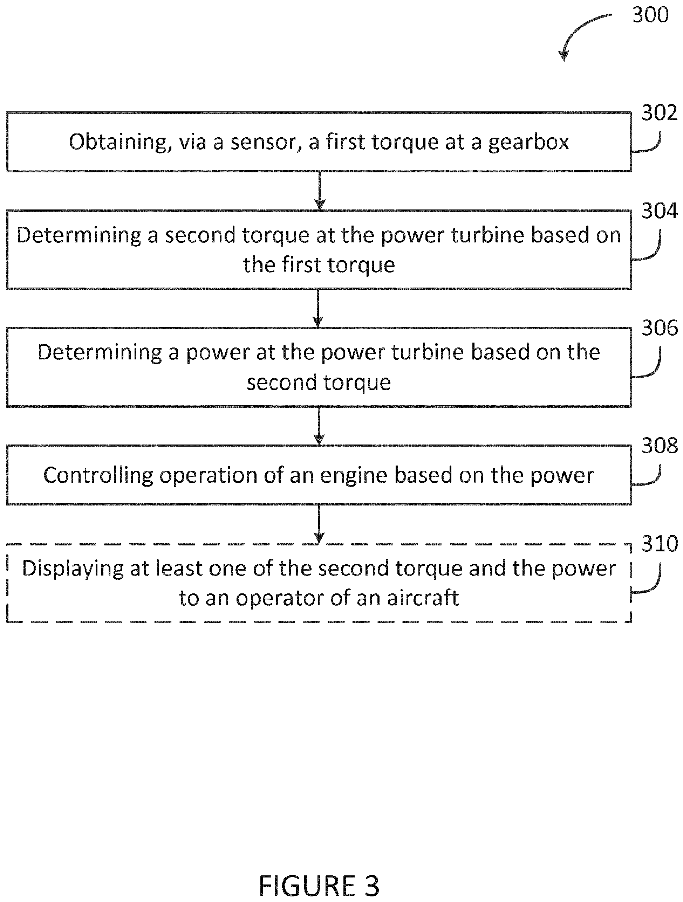

With reference to Figure 3, a method 300 for operating a gas-turbine engine comprising a gearbox and a power turbine coupled to the gearbox, for example the engine 110 having the gearbox 130 and the power turbine 124, is provided. At step 302, a first torque at the gearbox 130 is obtained via a sensor, for example the sensor 132.

At step 304, a second torque at the power turbine 124 is determined based on the first torque. The second torque is also based on an acceleration of a power shaft, for example the power shaft 126, and on a rotational inertia of the power shaft 126. At step 306, a power at the power turbine 124 is determined based on the second torque. The power is also based on a speed of the power shaft 126.

At step 308, operation of the engine is controlled based on the power. For example, the fuel flow to the engine and/or one or more parameters of a load coupled to the engine 110 are adjusted. Optionally, at step 310, one of the second torque and the power is displayed to an operator of the engine 110, for example an operator of the aircraft to which the engine 110 belongs.

It should be noted that the translation of the torque from the gearbox 130 to the power turbine 124 can be performed across any number of mechanical components disposed between the output shaft 128 to which the gearbox 130 is connected and the power turbine 124. For instance, the translation of the torque can be performed for two spool engines, three spool engines, or engines having any other suitable number of spools. In addition, the translation of the torque can be performed across any number of shafts or other linkages disposed between the output shaft 128 and the power turbine 124.

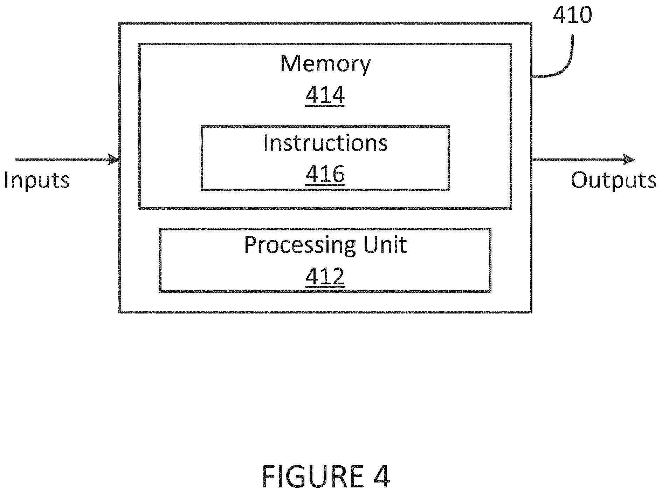

With reference to Figure 4, the method 300 may be implemented by a computing device 410, comprising a processing unit 412 and a memory 414 which has stored therein computer-executable instructions 416. For example, the controller 210 may be embodied as the computing device 410. The processing unit 412 may comprise any suitable devices configured to implement the method 300 such that instructions 416, when executed by the computing device 410 or other programmable apparatus, may cause the functions/acts/steps performed as part of the method 300 as described herein to be executed. The processing unit 412 may comprise, for example, any type of general-purpose microprocessor or microcontroller, a digital signal processing (DSP) processor, a central processing unit (CPU), an integrated circuit, a field programmable gate array (FPGA), a reconfigurable processor, other suitably programmed or programmable logic circuits, or any combination thereof.

The memory 414 may comprise any suitable known or other machine-readable storage medium. The memory 414 may comprise non-transitory computer readable storage medium, for example, but not limited to, an electronic, magnetic, optical, electromagnetic, infrared, or semiconductor system, apparatus, or device, or any suitable combination of the foregoing. The memory 414 may include a suitable combination of any type of computer memory that is located either internally or externally to device, for example random-access memory (RAM), read-only memory (ROM), compact disc read-only memory (CDROM), electro-optical memory, magneto-optical memory, erasable programmable read-only memory (EPROM), and electrically-erasable programmable read-only memory (EEPROM), Ferroelectric RAM (FRAM) or the like. Memory 414 may comprise any storage means (e.g., devices) suitable for retrievably storing machine-readable instructions 416 executable by processing unit 412.

It should be noted that the controller 210, as implemented by the computing device 410, may be implemented as part of a full-authority digital engine controls (FADEC) or other similar device, including electronic engine control (EEC), engine control unit (EUC), various actuators, and the like.

The methods and systems for operating a gas-turbine engine comprising a gearbox and a power turbine coupled to the gearbox described herein may be implemented in a high level procedural or object oriented programming or scripting language, or a combination thereof, to communicate with or assist in the operation of a computer system, for example the computing device 410. Alternatively, the methods and systems described herein may be implemented in assembly or machine language. The language may be a compiled or interpreted language. Program code for implementing the methods and systems described herein may be stored on a storage media or a device, for example a ROM, a magnetic disk, an optical disc, a flash drive, or any other suitable storage media or device. The program code may be readable by a general or special-purpose programmable computer for configuring and operating the computer when the storage media or device is read by the computer to perform the procedures described herein. Embodiments of the methods and systems described herein may also be considered to be implemented by way of a non-transitory computer-readable storage medium having a computer program stored thereon. The computer program may comprise computer-readable instructions which cause a computer, or more specifically the processing unit 412 of the computing device 410, to operate in a specific and predefined manner to perform the functions described herein, for example those described in the method 300.

Computer-executable instructions may be in many forms, including program modules, executed by one or more computers or other devices. Generally, program modules include routines, programs, objects, components, data structures, etc., that perform particular tasks or implement particular abstract data types. Typically the functionality of the program modules may be combined or distributed as desired in various embodiments.

The above description is meant to be exemplary only, and one skilled in the art will recognize that changes may be made to the embodiments described without departing from the scope of the invention disclosed. Still other modifications which fall within the scope of the present invention will be apparent to those skilled in the art, in light of a review of this disclosure.

Various aspects of the methods and systems described herein may be used alone, in combination, or in a variety of arrangements not specifically discussed in the embodiments described in the foregoing and is therefore not limited in its application to the details and arrangement of components set forth in the foregoing description or illustrated in the drawings. For example, aspects described in one embodiment may be combined in any manner with aspects described in other embodiments. Although particular embodiments have been shown and described, it will be apparent to those skilled in the art that changes and modifications may be made without departing from this invention in its broader aspects. The scope of the following claims should not be limited by the embodiments set forth in the examples, but should be given the broadest reasonable interpretation consistent with the description as a whole.

## Claims

**1.** A method (300) for operating a gas turbine engine (110) comprising a gearbox (130) and a power turbine (124) coupled to the gearbox (130), the method (300) comprising:

obtaining, via a sensor (132) or a virtual sensor, a value of a first torque at a location proximate to or within the gearbox (130);
determining a second torque at the power turbine (124) based on the value of the first torque, an acceleration of a shaft (126) of the power turbine (124) and a rotational inertia of the shaft (126);
determining a power at the power turbine (124) based on the second torque and a speed of the shaft (126) of the power turbine (124);
comparing the second torque to associated torque limits; and
controlling operation of the engine (110) based on the power, wherein controlling operation of the engine (110) comprises preventing the second torque from surpassing the associated torque limits.

**2.** The method of claim 1, wherein determining the second torque is based on the equation

$$Q_{pt} = Q_s + \dot{N}_{pt} \cdot I_{pt}$$

where $Q_{pt}$ is the second torque, $Q_s$ is the first torque, $\dot{N}_{pt}$ is the acceleration of the shaft, and $I_{pt}$ is the rotational inertia of the shaft (126).

**3.** The method of claim 1 or 2, wherein determining the power is based on the equation

$$SHP_{pt} = Q_{pt} \cdot N_{pt} \cdot k$$

where $SHP_{pt}$ is the power, $Q_{pt}$ is the second torque,

$N_{pt}$ is the speed of the shaft (126), and *k* is a predetermined constant.

4. The method of claim 1, 2 or 3, wherein controlling operation of the engine (110) comprises adjusting a fuel flow to the engine (110).

5. The method of any preceding claim, wherein controlling operation of the engine (110) comprises adjusting a blade angle of a propeller coupled to the engine (110).

6. The method of any preceding claim, further comprising comparing the first torque to associated torque limits, wherein controlling operation of the engine (110) comprises preventing the first torque from surpassing the associated torque limits.

7. The method of any preceding claim, wherein the engine (110) is for an aircraft, further comprising displaying, to an operator of the aircraft, at least one of the second torque and the power.

8. An engine control system for a gas turbine engine (110) comprising a gearbox (130) and a power turbine (124) coupled to the gearbox (130), the system comprising:

a sensor (132) or a virtual sensor configured for obtaining a value of a first torque at a location proximate to or within the gearbox (130); and
a processing unit (412) communicatively coupled to the sensor (132) or configured to derive the virtual sensor value of the first torque, a non-transitory computer-readable memory (414) communicatively coupled to the processing unit (412) and comprising computer-readable program instructions (416) executable by the processing unit (412) for:

determining a second torque at the power turbine (124) based on the value of the first torque, an acceleration of a shaft (126) of the power turbine (124) and a rotational inertia of the shaft (126);
determining a power at the power turbine (124) based on the second torque and a speed of the shaft (126) of the power turbine (124);
comparing the second torque to associated torque limits; and
controlling operation of the engine (110) based on the power, wherein controlling operation of the engine (110) comprises preventing the second torque from surpassing the associated torque limits.

9. The system of claim 8, wherein determining the second torque is based on the equation

$$Q_{pt} = Q_s + \dot{N}_{pt} \cdot I_{pt}$$

where $Q_{pt}$ is the second torque, $Q_s$ is the first torque, $\dot{N}_{pt}$ is the acceleration of the shaft, and $I_{pt}$ is the rotational inertia of the shaft (126).

10. The system of claim 8 or 9, wherein determining the power is based on the equation

$$SHP_{pt} = Q_{pt} \cdot N_{pt} \cdot k$$

**where** $SHP_{pt}$ is the power, $Q_{pt}$ is the second torque, $N_{pt}$ is the speed of the shaft (126), and *k* is a predetermined constant.

11. The system of any of claims 8 to 10, wherein controlling operation of the engine (110) comprises adjusting a fuel flow to the engine (110).

12. The system of any of claims 8 to 11, wherein controlling operation of the engine (110) comprises adjusting a blade angle of a propeller coupled to the engine (110).

13. The system of any of claims 8 to 12, wherein the program instructions (416) are further executable by the processing unit (412) for comparing the first torque to associated torque limits, wherein controlling operation of the engine (110) comprises preventing the first torque from surpassing the associated torque limits.

14. The system of any of claims 8 to 13, wherein the engine (110) is for an aircraft, wherein the program instructions (416) are further executable by the processing unit (412) for displaying, to an operator of the aircraft, at least one of the second torque and the power.

**Patentansprüche**

1. Verfahren (300) zum Betreiben eines Gasturbinentriebwerks (110), umfassend ein Getriebe (130) und eine mit dem Getriebe (130) gekoppelte Nutzturbine (124), wobei das Verfahren (300) Folgendes umfasst:

Erhalten, über einen Sensor (132) oder einen virtuellen Sensor, eines Wertes eines ersten Drehmoments an einer Position nahe oder innerhalb des Getriebes (130);
Bestimmen eines zweiten Drehmoments an der Nutzturbine (124) basierend auf dem Wert des ersten Drehmoments, einer Beschleunigung einer Welle (126) der Nutzturbine (124) und einer Rotationsträgheit der Welle (126);

Bestimmen einer Leistung an der Nutzturbine (124) basierend auf dem zweiten Drehmoment und einer Drehzahl der Welle (126) der Nutzturbine (124);

Vergleichen des zweiten Drehmoments mit zugeordneten Drehmomentbegrenzungen; und Steuern des Betriebs des Triebwerks (110) basierend auf der Leistung, wobei das Steuern des Betriebs des Triebwerks (110) Verhindern umfasst, dass das zweite Drehmoment die zugeordneten Drehmomentbegrenzungen überschreitet.

2.  Verfahren nach Anspruch 1, wobei das Bestimmen des zweiten Drehmoments auf der Gleichung

$$Q_{pt} = Q_s + \dot{N}_{pt} \cdot I_{pt}$$

basiert, wobei $Q_{pt}$ das zweite Drehmoment, $Q_s$ das erste Drehmoment, $\dot{N}_{pt}$ die Beschleunigung der Welle und $I_{pt}$ die Rotationsträgheit der Welle (126) ist.

3.  Verfahren nach Anspruch 1 oder 2, wobei das Bestimmen der Leistung auf der Gleichung

$$SHP_{pt} = Q_{pt} \cdot N_{pt} \cdot k$$

basiert, wobei $SHP_{pt}$ die Leistung, $Q_{pt}$ das zweite Drehmoment, $N_{pt}$ die Drehzahl der Welle (126) und $k$ eine vorbestimmte Konstante ist.

4.  Verfahren nach Anspruch 1, 2 oder 3, wobei das Steuern des Betriebs des Triebwerks (110) das Einstellen eines Kraftstoffflusses zu dem Triebwerk (110) umfasst.

5.  Verfahren nach einem der vorhergehenden Ansprüche, wobei das Steuern des Betriebs des Triebwerks (110) das Einstellen eines Anstellwinkels eines mit dem Triebwerk (110) gekoppelten Propellers umfasst.

6.  Verfahren nach einem der vorhergehenden Ansprüche, ferner umfassend das Vergleichen des ersten Drehmoments mit zugeordneten Drehmomentbegrenzungen, wobei das Steuern des Betriebs des Triebwerks (110) das Verhindern umfasst, dass das erste Drehmoment die zugeordneten Drehmomentbegrenzungen überschreitet.

7.  Verfahren nach einem der vorhergehenden Ansprüche, wobei das Triebwerk (110) für ein Luftfahrzeug bestimmt ist, ferner umfassend das Anzeigen mindestens eines von dem zweiten Drehmoment und der Leistung an einen Bediener des Luftfahrzeugs.

8.  Triebwerkssteuerungssystem für ein Gasturbinentriebwerk (110), umfassend ein Getriebe (130) und eine mit dem Getriebe (130) gekoppelte Nutzturbine (124), wobei das System Folgendes umfasst:

einen Sensor (132) oder einen virtuellen Sensor, der dazu konfiguriert ist, einen Wert eines ersten Drehmoments an einer Position nahe oder innerhalb des Getriebes (130) zu erhalten; und

eine Verarbeitungseinheit (412), die kommunikativ mit dem Sensor (132) gekoppelt oder konfiguriert ist, um den Wert des ersten Drehmoments an dem virtuellen Sensor abzuleiten, einen nichttransitorischen computerlesbaren Speicher (414), der kommunikativ mit der Verarbeitungseinheit (412) gekoppelt ist und computerlesbare Programmanweisungen (416) umfasst, die durch die Verarbeitungseinheit (412) ausführbar sind zum:

Bestimmen eines zweiten Drehmoments an der Nutzturbine (124) basierend auf dem Wert des ersten Drehmoments, einer Beschleunigung einer Welle (126) der Nutzturbine (124) und einer Rotationsträgheit der Welle (126);

Bestimmen einer Leistung an der Nutzturbine (124) basierend auf dem zweiten Drehmoment und einer Drehzahl der Welle (126) der Nutzturbine (124);

Vergleichen des zweiten Drehmoments mit zugeordneten Drehmomentbegrenzungen; und

Steuern des Betriebs des Triebwerks (110) basierend auf der Leistung, wobei das Steuern des Betriebs des Triebwerks (110) Verhindern umfasst, dass das zweite Drehmoment die zugeordneten Drehmomentbegrenzungen überschreitet.

9.  System nach Anspruch 8, wobei das Bestimmen des zweiten Drehmoments auf der Gleichung

$$Q_{pt} = Q_s + \dot{N}_{pt} \cdot I_{pt}$$

basiert, wobei $Q_{pt}$ das zweite Drehmoment, $Q_s$ das erste Drehmoment, $\dot{N}_{pt}$ die Beschleunigung der Welle und $I_{pt}$ die Rotationsträgheit der Welle (126) ist.

10. System nach Anspruch 8 oder 9, wobei das Bestimmen der Leistung auf der Gleichung

$$SHP_{pt} = Q_{pt} \cdot N_{pt} \cdot k$$

basiert, wobei $SHP_{pt}$ die Leistung, $Q_{pt}$ das zweite Drehmoment, $N_{pt}$ die Drehzahl der Welle (126) und $k$ eine vorbestimmte Konstante ist.

11. System nach einem der Ansprüche 8 bis 10, wobei das Steuern des Betriebs des Triebwerks (110) das Einstellen eines Kraftstoffflusses zu dem Triebwerk (110) umfasst.

12. System nach einem der Ansprüche 8 bis 11, wobei das Steuern des Betriebs des Triebwerks (110) das Einstellen eines Anstellwinkels eines mit dem Triebwerk (110) gekoppelten Propellers umfasst.

13. System nach einem der Ansprüche 8 bis 12, wobei die Programmanweisungen (416) ferner durch die Verarbeitungseinheit (412) ausführbar sind, um das erste Drehmoment mit zugeordneten Drehmomentbegrenzungen zu vergleichen, wobei das Steuern des Betriebs des Triebwerks (110) das Verhindern umfasst, dass das erste Drehmoment die zugeordneten Drehmomentbegrenzungen überschreitet.

14. System nach einem der Ansprüche 8 bis 13, wobei das Triebwerk (110) für ein Luftfahrzeug bestimmt ist, wobei die Programmanweisungen (416) ferner durch die Verarbeitungseinheit (412) ausführbar sind, um einem Bediener des Luftfahrzeugs mindestens eines von dem zweiten Drehmoment und der Leistung anzuzeigen.

**Revendications**

1. Procédé (300) permettant de faire fonctionner un moteur à turbine à gaz (110) comprenant une boîte de vitesses (130) et une turbine de puissance (124) couplée à la boîte de vitesses (130), le procédé (300) comprenant :

l'obtention, par l'intermédiaire d'un capteur (132) ou d'un capteur virtuel, d'une valeur d'un premier couple à un emplacement proche de la boîte de vitesses (130) ou à l'intérieur de celle-ci ;
la détermination d'un second couple au niveau de la turbine de puissance (124) sur la base de la valeur du premier couple, d'une accélération d'un arbre (126) de la turbine de puissance (124) et d'une inertie de rotation de l'arbre (126) ;
la détermination d'une puissance au niveau de la turbine de puissance (124) sur la base du second couple et d'une vitesse de l'arbre (126) de la turbine de puissance (124) ;
la comparaison du second couple à des limites de couple associées ; et
la commande du fonctionnement du moteur (110) sur la base de la puissance, dans lequel la commande du fonctionnement du moteur (110) consiste à empêcher le second couple de dépasser les limites de couple associées.

2. Procédé selon la revendication 1, dans lequel la détermination du second couple est basée sur l'équation

$$Q_{pt} = Q_s + \dot{N}_{pt} \cdot I_{pt}$$

où $Q_{pt}$ est le second couple, $Q_s$ est le premier couple, $\dot{N}_{pt}$ est l'accélération de l'arbre et $I_{pt}$ est l'inertie de rotation de l'arbre (126).

3. Procédé selon la revendication 1 ou 2, dans lequel la détermination de la puissance est basée sur l'équation

$$SHP_{pt} = Q_{pt} \cdot N_{pt} \cdot k$$

où $SHP_{pt}$ est la puissance, $Q_{pt}$ est le second couple, $N_{pt}$ est la vitesse de l'arbre (126) et $k$ est une constante prédéterminée.

4. Procédé selon la revendication 1, 2 ou 3, dans lequel la commande du fonctionnement du moteur (110) comprend le réglage d'un débit de carburant vers le moteur (110).

5. Procédé selon une quelconque revendication précédente, dans lequel la commande du fonctionnement du moteur (110) comprend le réglage d'un angle de pale d'une hélice couplée au moteur (110).

6. Procédé selon une quelconque revendication précédente, comprenant en outre la comparaison du premier couple à des limites de couple associées, dans lequel la commande du fonctionnement du moteur (110) consiste à empêcher le premier couple de dépasser les limites de couple associées.

7. Procédé selon une quelconque revendication précédente, dans lequel le moteur (110) est destiné à un aéronef, comprenant en outre l'affichage, pour un opérateur de l'aéronef, d'au moins l'un parmi le second couple et la puissance.

8. Système de commande de moteur pour un moteur à turbine à gaz (110) comprenant une boîte de vitesses (130) et une turbine de puissance (124) couplée à la boîte de vitesses (130), le système comprenant :

un capteur (132) ou un capteur virtuel conçu pour obtenir une valeur d'un premier couple à un emplacement proche de la boîte de vitesses (130) ou à l'intérieur de celle-ci ; et

une unité de traitement (412) couplée en communication avec le capteur (132) ou conçue pour obtenir la valeur de capteur virtuel du premier couple,

une mémoire non transitoire lisible par ordinateur (414) couplée en communication avec l'unité de traitement (412) et comprenant des instructions de programme lisibles par ordinateur (416) exécutables par l'unité de traitement (412) pour :

déterminer un second couple au niveau de la turbine de puissance (124) sur la base de la valeur du premier couple, d'une accélération d'un arbre (126) de la turbine de puissance (124) et d'une inertie de rotation de l'arbre (126) ;

déterminer une puissance au niveau de la turbine de puissance (124) sur la base du second couple et une vitesse de l'arbre (126) de la turbine de puissance (124) ;

comparer le second couple aux limites de couple associées ; et

la commande du fonctionnement du moteur (110) sur la base de la puissance, dans lequel la commande du fonctionnement du moteur (110) consiste à empêcher le second couple de dépasser les limites de couple associées.

9. Système selon la revendication 8, dans lequel la détermination du second couple est basée sur l'équation

$$Q_{pt} = Q_s + \dot{N}_{pt} \cdot I_{pt}$$

où $Q_{pt}$ est le second couple, $Q_s$ est le premier couple, $\dot{N}_{pt}$ est l'accélération de l'arbre et $I_{pt}$ est l'inertie de rotation de l'arbre (126).

10. Système selon la revendication 8 ou 9, dans lequel la détermination de la puissance est basée sur l'équation

$$SHP_{pt} = Q_{pt} \cdot N_{pt} \cdot k$$

où $SHP_{pt}$ est la puissance, $Q_{pt}$ est le second couple, $N_{pt}$ est la vitesse de l'arbre (126) et $k$ est une constante prédéterminée.

11. Système selon l'une quelconque des revendications 8 à 10, dans lequel la commande du fonctionnement du moteur (110) comprend le réglage d'un débit de carburant vers le moteur (110).

12. Système selon l'une quelconque des revendications 8 à 11, dans lequel la commande du fonctionnement du moteur (110) comprend le réglage d'un angle de pale d'une hélice couplée au moteur (110).

13. Système selon l'une quelconque des revendications 8 à 12, dans lequel les instructions de programme (416) sont en outre exécutables par l'unité de traitement (412) pour comparer le premier couple à des limites de couple associées, dans lequel la commande du fonctionnement du moteur (110) consiste à empêcher le premier couple de dépasser les limites de couple associées.

14. Système selon l'une quelconque des revendications 8 à 13, dans lequel le moteur (110) est destiné à un aéronef, dans lequel les instructions de programme (416) sont en outre exécutables par l'unité de traitement (412) pour afficher, à un opérateur de l'aéronef, au moins l'un parmi le second couple et la puissance.

FIGURE 1

FIGURE 2

300

| 302 |
|---|
| Obtaining, via a sensor, a first torque at a gearbox |

| 304 |
|---|
| Determining a second torque at the power turbine based on the first torque |

| 306 |
|---|
| Determining a power at the power turbine based on the second torque |

| 308 |
|---|
| Controlling operation of an engine based on the power |

| 310 |
|---|
| Displaying at least one of the second torque and the power to an operator of an aircraft |

FIGURE 3

410

Memory
414

Instructions
416

Processing Unit
412

Inputs

Outputs

FIGURE 4

**EP 3 489 485 B2**

**Patent documents cited in the description**

- US 3709069 A
- US 4522026 A
- EP 3258070 A1